# EUROPEAN PATENT APPLICATION

(11) **EP 2 937 942 A1**
(43) Date of publication of application: **28.10.2015**
(21) Application number: 15164433.3
(22) Date of filing: 21.04.2015
(51) Int. Cl.: H01R 13/03, B32B 15/01, C25D 5/12, H01R 12/58

(54) **METHOD FOR PRODUCING AN ELECTRICAL CONTACT ELEMENT FOR PREVENTING TIN WHISKER FORMATION, AND CONTACT ELEMENT**

(30) Priority: 24.04.2014 DE 102014005941
(71) Applicant: TE Connectivity Germany GmbH, 64625 Bensheim (DE)
(72) Inventor: Schmidt, Helge, 67346 Speyer (DE); Thoss, Stefan, 64673 Zwingenberg (DE)
(74) Representative: Grünecker Patent- und Rechtsanwälte PartG mbB

(57) **Abstract**

The present invention relates to a method for producing an electrical contact element, by means of which the formation of tin whiskers can be prevented, in particular in press-in connections. The present invention further also relates to a corresponding contact element. The method for producing an electrical contact element comprises the following steps: providing a base material; applying at least one electrically conductive contact layer to the base material, wherein the contact layer has an outer surface which is elevated by roughness and which is suitable for receiving a lubricant.

## Description

The present invention relates to a method for producing an electrical contact element, by means of which the formation of tin whiskers can be prevented, in particular in press-in connections. The present invention further also relates to a corresponding contact element.

The use of tin as an electrically conductive material in electronic circuits often results, as is adequately known, in so-called tin whiskers, that is to say, needle-like formations of tin which form mainly on surfaces with lead-free tin coatings. Those whiskers may have a length of up to 1 mm and, in extreme cases, up to 2 mm. They are electrically conductive and can therefore result in short-circuits, for example, on assembled printed circuit boards. In this instance, a current of from 10 to 50 mA may flow through a whisker, until the whisker does not melt but instead breaks off at a maximum tolerable current density. As a result of the increasing miniaturisation, the spacings between component connections have decreased to a few hundred micrometres, which is a distance that the tin whiskers can readily cross. As a result of the increasingly small current consumption of the electronic circuits, there is also no self-cleaning effect since the tin whiskers are no longer generally destroyed by the current flow in the event of short-circuits.

The occurrence of tin whiskers is particularly promoted by the action of mechanical stresses, by internal mechanical stresses in the tin layer or the connections, which are then transmitted in turn to the tin layer, by high temperatures and a high level of air humidity.

Therefore, a component failure as a result of tin whiskers occurs particularly often if a tin coating in the fitted state is exposed to a permanent mechanical pressure loading. This regularly occurs, for example, in the case of press-in contacts, film conductor contacts and injection-moulded tin surfaces.

A known method of reducing the formation of tin whiskers involves the addition of lead to the tin metal-coating. As a result of the introduction of the ROHS Guideline (Guideline 2011/65/EU of the European Parliament and the Council of 8th June 2011 for limiting the use of specific dangerous substances in electrical and electronic devices, Official Journal EU (2011) No. L174, pages 88-110), however, such a low-whisker tin/lead alloy is nowadays permitted only in exceptional cases and is in the medium-term completely prohibited for applications in the plug type connector sector. Although other tin alloys, such as, for example, silver/tin, and the use of various tempering steps, have inhibited the growth of whiskers, they cannot prevent it completely so that there always remains a residual risk of formation of short-circuits.

Particularly in the automotive sector, however, the safety in respect of whisker formation must comply with high requirements.

Therefore, if the presence of tin is completely dispensed within the immediate contact region with respect to a mating contact and furthermore, for example, a printed circuit board hole having organic surface protection (OSP) or a silver-coated surface is selected as the mating contact, the formation of whiskers can be completely prevented.

In this instance, there may be considered, for example, a contact layer comprising nickel. However, it has been found that conventional nickel coatings require excessively high insertion forces when a press-in contact is pressed in, so that the press-in contact itself may then become deformed or the printed circuit board hole becomes excessively damaged.

Therefore, there is a need for a method of producing an electrical contact element and an electrical contact element which, on the one hand, can substantially reduce a tin whisker formation but, on the other hand, allows sufficiently large retention forces and, at the same time, low press-in forces during the production of press-in contacts.

This object is achieved by the subject-matter of the independent patent claims. The dependent patent claims relate to advantageous developments of the present invention.

The present invention is based on the notion of dispensing with tin completely in the contact region of an electrical contact element and instead using another metal which does not tend to form whiskers. The disadvantage that this metal coating is generally less ductile than tin can be overcome in that the contact layer is provided with an outer surface which is elevated by roughness and which is suitable for receiving a lubricant in a permanent manner. As a result of such storage of lubricants, a substantially reduced pressing-in force can be achieved during the actual electrical contacting. The indentations, in which the lubricant which can exhibit its effect, for example, during introduction into a mating contact, is introduced, prevent the lubricant from becoming volatilised or being lost by creeping.

During the insertion operation, the lubricant is displaced so that it is not an impediment during the actual electrical contacting. During the storage of the contact elements, the stored lubricant further affords the advantage that it protects from contamination and corrosion.

In particular, the contact layer surface may be provided with an application of oil which has a kinematic viscosity value between 1.5 mm²/s and 680 mm²/s.

Base materials which may be considered for producing the electrical contact element include, for example, copper, tin bronze, brass, high-strength brass and various copper alloys such as CuNi, CuMn, CuNiSi or CuAl alloys. Furthermore, weakly alloyed copper alloys such as, for example, CuFe2P may also be used. The tin-free contact layer metal coating according to the present invention may preferably be produced from nickel, but also, for example, from iron, cobalt, rhodium, iridium, palladium, silver or an alloy comprising those elements.

In order to produce the desired fissured surface which is capable of storing lubricant, the contact layer may have pyramid-like, conical, spherical and/or clod-like elevations.

In order to produce those elevations, there are various possibilities. Firstly, the contact layer can already be built up so that it has corresponding elevations, between which the lubricant can be stored. If the contact layer is produced, for example, by means of metal-coating, the parameters of the metal-coating, such as, for example, the degree of acidity or the presence of different crystallisation nuclei and catalysts, can be selected in such a manner that corresponding structures are built up. Alternatively, however, the corresponding roughness can also be formed by means of different physical or chemical material-removing methods. For example, suitable etching steps may result in a corresponding surface structuring.

The corresponding elevations in the contact layer have a typical height between 0.4 µm and 10 µm. It was able to be shown that optimum results may be achieved for values between 0.8 µm and 5 µm.

According to an advantageous development of the present invention, at least one intermediate layer can be applied between the base material and the contact layer. The adhesion of the contact layer to the base material can be improved with such an intermediate layer. In the case of a nickel contact layer, for example, the intermediate layer may be formed by a nickel layer having less surface roughness than the contact layer. In the case of other contact layer metal-coatings, the intermediate layer may comprise either the same material or a different material.

The advantageous properties of the contact element according to the invention can be utilised particularly effectively if the electrical contact element is a press-in contact element, plug type contact element, injection-moulded contact element, solder connection or film conductor contact element. In all these applications, the whisker formation is a particularly problematic cause of failures. In particular in the case of combination with contact springs, either the complete freedom from whiskers can be achieved when using silver or gold layers on the side of the mating contact, or, in the case of a tin layer on the mating contact side, the risk of failure owing to whisker formation can all the same be substantially reduced if the mating contact side is under less mechanical stress.

For a better understanding of the present invention, it is explained in greater detail with reference to the embodiments illustrated in the following Figures. The same components are referred to with the same reference numerals and the same component designations. Furthermore, individual features or feature combinations from the embodiments shown and described may also be inventive solutions or solutions according to the invention which are independent per se.

In the drawings:
Figure 1 is a schematic cross-section of a contact layer on a base material;
Figure 2 is a schematic cross-section of a contact layer and an intermediate layer on a base material;
Figure 3 is an electron scanning microscope image of a contact layer surface before being coated with a lubricant;
Figure 4 is a schematic illustration of a press-in contact before being pressed into a printed circuit board;
Figure 5 is a schematic illustration of a press-in contact in the completely assembled state.

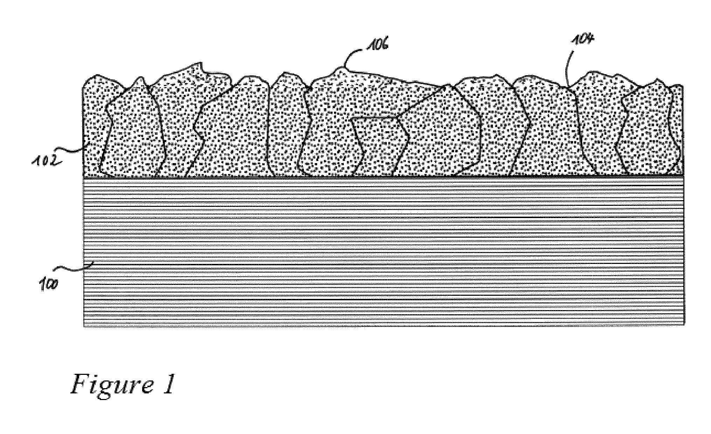

The present invention is intended to be explained in greater detail below initially with reference to Figure 1.

The starting point for the method according to the invention is a base material 100. That base material 100 may be either a strip conductor or a plug pin or the like, and comprises, for example, copper or a copper alloy, such as tin bronze, brass, high-strength brass or a CuNi, CuMn, CuNiSi, CuAl alloy.

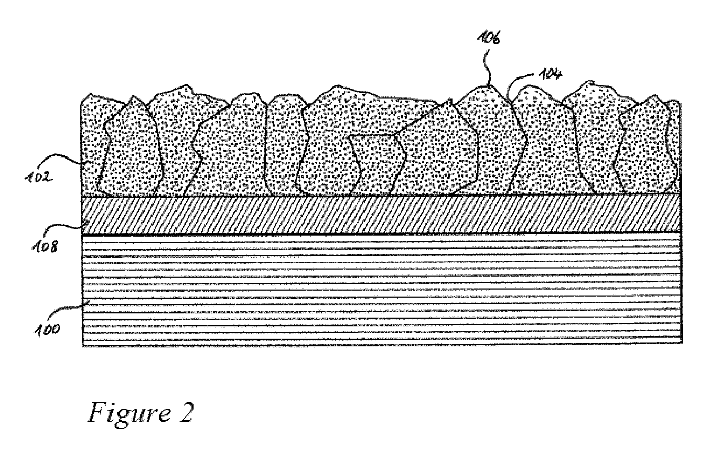

The present Figure 1 and Figure 2 illustrate only the region which is important for the electrical contacting, that is to say, for example, the region of a press-in plug pin which is in contact with a contact hole. According to the invention a tin-free metal coating which forms a contact layer 102 is applied to the base material 100 in this region.

According to the present invention, the surface of the contact layer 102 is structured by means of defined indentations 104 and elevations 106. That fissured surface allows a lubricant (not illustrated in the Figures) to be retained on the surface of the contact layer 102 so as to be able to be stored for a long time. The elevations 106 may have extremely different shapes depending on how they are produced. They may be constructed, for example, to be pyramid-like, conical, spherical or clod-like or columnar. The height difference between the indentation 104 and the elevation 106 is generally between 0.4 µm and 10 µm. In the optimum case, such a roughness may be between 0.8 µm and 5 µm. If a lubricant having a viscosity between 1.5 mm²/s and 680 mm²/s is used in conjunction with a surface of the contact layer 102 structured in this manner, an application of oil is capable of being stored for a long time and does not negatively influence the subsequent pressing-in operation. The lubricant may comprise, for example, a highly viscous oil. For application, the lubricant is mixed with a highly flowable solvent which acts as a carrier substance and which at least partially volatilises after application.

A significant aspect for preventing tin whiskers is that, in the region of the actual contacting (which is illustrated in Figures 1 and 2), there is no tin coating at the direct surface. To this end, the contact layer 102 is formed, for example, from iron, cobalt, nickel, rhodium, iridium, palladium, silver or an alloy comprising such elements.

According to an advantageous embodiment of the present invention, the tin-free contact layer 102 is deposited by means of electroplating technology. The parameters of the electroplating deposition, that is to say, the composition of the bath, the addition of catalysts or acids, and the current strengths and voltage values, may be adjusted in such a manner that the desired surface roughness is produced.

For a person skilled in the art, however, it is self-evident that there may also be used other deposition techniques which allow sufficient surface roughness with, at the same time, good adhesion, for the formation of the tin-free contact layer 102 according to the invention.

Furthermore, a smoothly built-up metal-coating layer may also be roughened accordingly in a second process step, for example, an etching step. The significant aspect in this instance is that no tin is present at the contact surface and the roughness is high enough to bond a lubricant therein in a durable manner.

Figure 2 is a schematic illustration of a development of the arrangement from Figure 1. According to this embodiment, the tin-free contact layer 102 is not applied directly to the base material 100 but instead there is provided an intermediate layer 108. That intermediate layer particularly facilitates the deposition of the contact layer 102 and improves the adhesion to the base material 100. For example, a smooth intermediate nickel layer 108 may be used for a nickel contact layer 102. Naturally, however, other metals and alloys may also be used as an intermediate layer 108.

It should be noted that the thickness relationships of Figure 2 are not intended to be interpreted to be true to scale in any manner. Thus, it has been shown that it is particularly advantageous to apply an intermediate layer of nickel having a thickness of from 1 to 2 µm to the base layer 100 and subsequently to build up the structured contact layer 102 according to the invention from nickel having a thickness of 0.5 µm.

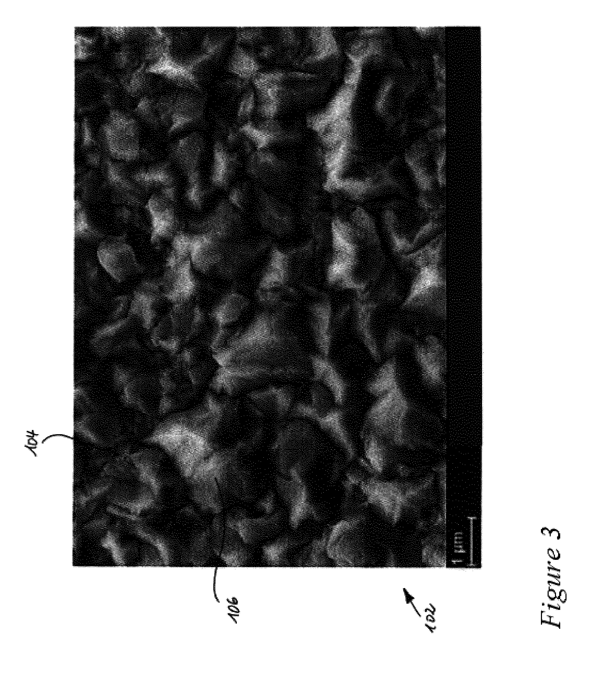

Figure 3 is an electron scanning microscope image of a nickel contact layer 102 with the corresponding elevations and indentations 106, 104.

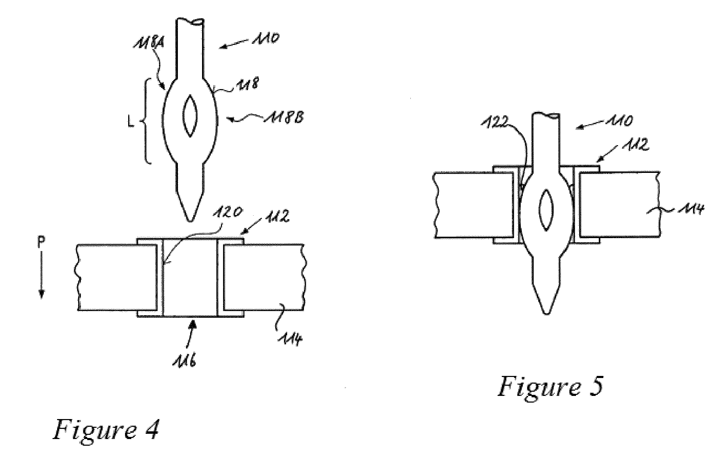

With reference to Figures 4 and 5, an advantageous application example of the contact layer configuration according to the invention is intended to be explained in greater detail.

Figure 4 shows a press-in contact pin 110 before insertion into the contact hole of a printed circuit board 114. In particular, the printed circuit board 114 has a continuous opening 116, in which an electrically conductive socket 112 is fitted. Figure 4 further shows the press-in pin 110, which has a surface portion 118 which is curved in a convex manner in the pressing-in direction, that is to say, in the direction of the arrow P, over a predetermined longitudinal portion L. That portion is formed on mutually opposing contact members 118A, 118B which are formed on the press-in pin 110 in the region of the longitudinal portion L, curve outwards from cylindrical longitudinal portions of the press-in pin and enclose a central empty space.

In the embodiment shown, the socket 112 is formed from pure copper. The base material of the press-in pin 110 is also formed from copper and in any case has, in the region of the curved surface 118, the contact layer 102 according to the invention which is provided with an application of oil in the illustrated process situation shortly before the assembly of the two contact partners.

In order to produce the press-in connection, the press-in pin 110 is moved relative to the printed circuit board 114 after orientation by means of the socket 112 in the direction of the arrow P. In this instance, the press-in pin 110 is first centred in the socket with the front longitudinal portion thereof, whose outer diameter is smaller than the inner diameter of the socket. With continuing movement in the press-in direction, the curved longitudinal portion 118 is finally introduced into the socket 112. In this instance, first the spacing between the outer peripheral face of the press-in pin 110 and the inner peripheral face 120 of the socket 112 is reduced until both faces move into contact with each other. With continuing movement in the press-in direction, the contact members 118A, 118B are first resiliently deformed in a radially inward direction and finally, with further continuing movement, the material of the outer layer is plastically deformed.

In this state, the oil application retained at the surface of the contact layer 102 becomes effective as a lubricant so that the necessary forces remain sufficiently small during further movement in the direction of the arrow P. With continuing pressing-in movement, material is sheared off from the outer peripheral face of the press-in pin 110, and a projection 122 is formed between the rear flank of the curvature 118 in the pressing-in direction and the inner peripheral face 120 of the socket 112. The press type connection produced in this manner is, on the one hand, retained by resilient restoring forces of the contact members 118A, 118B which are pretensioned radially inwards and, on the other hand, by a possible cold welding between the surface material of the press-in pin 110 and the socket 112. The lubricant is also displaced outwards in this operation so that a reliable electrical contacting is ensured.

If no tin is involved in the region of the electrical contacting between the surface portion 118 and the socket 112, which region is mechanically loaded by the pressing action, that is to say, the printed circuit board also does not contain any tin, the occurrence of tin whiskers can be prevented with complete certainty. If the printed circuit board does contain tin, the growth of whiskers is substantially prevented by using contacts with the new coating.

However, the contact layer 102 according to the invention may also advantageously be used with a large number of other electrical connections. For example, the contact springs of plug type micro-connectors may be provided with the coating according to the invention. Furthermore, the contact layer according to the invention is suitable for use for injection-moulded contact elements, solder connections or film conductor contacts.

As a result of the complete omission of tin in the contact region, therefore, a technology which does not have any more whisker growth can be provided. Therefore, the shearing of whiskers can also be prevented, as can the bridging between adjacent electrically conductive structures.

**List of reference numerals:**

| Reference numeral | Description |
|---|---|
| 100 | Base material |
| 102 | Tin-free contact layer |
| 104 | Indentations |
| 106 | Elevations |
| 108 | Intermediate layer |
| 110 | Press-in pin |
| 112 | Socket |
| 114 | Printed circuit board |
| 116 | Opening |
| 118 | Surface portion |
| 118A, 118B | Contact member |
| 120 | Inner peripheral face of socket |
| 122 | Projection |

## Claims

1. Method for producing an electrical contact element, comprising the following steps:
providing a base material;
applying at least one electrically conductive contact layer to the base material,
wherein the contact layer has an outer surface which is elevated by roughness and which is suitable for receiving a lubricant.

2. Method according to claim 1, further comprising the step of coating the contact layer surface with a lubricant.

3. Method according to claim 2, wherein the contact layer surface is provided with an application of oil which has a kinematic viscosity value between 1.5 mm²/s and 680 mm²/s.

4. Method according to any one of the preceding claims, wherein the base material is produced from copper, tin bronze, brass, high-strength brass, a CuNi, CuMn, CuNiSi or CuAl alloy or a weakly alloyed copper alloy.

5. Method according to any one of the preceding claims, wherein the contact layer is formed by a tin-free metal coating.

6. Method according to claim 5, wherein the tin-free metal coating comprises iron, cobalt, nickel, rhodium, iridium, palladium, silver or an alloy comprising those elements.

7. Method according to any one of the preceding claims, wherein the contact layer has pyramid-like, conical, spherical and/or clod-like elevations.

8. Method according to any one of the preceding claims, wherein the contact layer is produced by means of electroplating and parameters of the electroplating are selected in such a manner that the roughness is produced.

9. Method according to any one of the preceding claims, wherein a height of the elevations of the contact layer has a value between 0.4 µm and 10 µm, preferably between 0.8 µm and 5 µm.

10. Method according to any one of the preceding claims, wherein at least one intermediate layer is applied between the base material and the contact layer.

11. Method according to claim 10, wherein the intermediate layer is formed by a nickel layer having less surface roughness than the contact layer.

12. Electrical contact element having:
an electrically conductive base material; and
a coating which is formed on at least one portion of the electrically conductive base material, wherein the coating has a contact layer which is formed on the base material,
wherein the contact layer has an outer surface which is elevated by roughness and which is suitable for receiving a lubricant.

13. Electrical contact element according to claim 12, further comprising an application of oil which has a kinematic viscosity value between 1.5 mm²/s and 680 mm²/s.

14. Electrical contact element according to claim 12 or claim 13, which is formed as a press-in contact element, plug type contact element, injection-moulded contact element, solder connection or film conductor contact element.

15. Electrical contact element according to any one of claims 12 to 14, wherein the base material is produced from copper, tin bronze, brass, high-strength brass, a CuNi, CuMn, CuNiSi or CuAl alloy or a weakly alloyed copper alloy.

16. Electrical contact element according to any one of claims 12 to 15, wherein the contact layer is formed by a tin-free metal coating.

17. Electrical contact element according to claim 16, wherein the tin-free metal-coating comprises iron, cobalt, nickel, rhodium, iridium, palladium, silver or an alloy comprising those elements.

18. Electrical contact element according to any one of claims 12 to 17, wherein the contact layer has pyramid-like, conical, spherical and/or clod-like elevations.

19. Electrical contact element according to any one of claims 12 to 18, wherein a height of the elevations of the contact layer has a value between 0.4 µm and 10 µm, preferably between 0.8 µm and 5 µm.

20. Electrical contact element according to any one of claims 12 to 19, wherein at least one intermediate layer is applied between the base material and the contact layer.

21. Electrical contact element according to claim 20, wherein the intermediate layer is formed by a nickel layer having less surface roughness than the contact layer.
